# EUROPEAN PATENT APPLICATION

(11) **EP 3 297 205 A1**
(43) Date of publication of application: **21.03.2018**
(21) Application number: 16189220.3
(22) Date of filing: 16.09.2016
(51) Int. Cl.: H04L 7/04, H04L 25/03

(54) **SEQUENCE ALIGNER FOR SYNCHRONIZING DATA**

(71) Applicant: Universiteit Gent, 9000 Gent (BE); IMEC VZW, 3001 Leuven (BE)
(72) Inventor: COUDYZER, Gertjan, 9600 Ronse (BE); YIN, Xin, 9050 Gent (BE)
(74) Representative: DenK iP

(57) **Abstract**

A synchronization system (100) for synchronizing an incoming data stream (140) with a synchronization pattern. The synchronization system (100) being adapted for generating an internal synchronization pattern which is the same as the synchronization pattern of the incoming data stream (140) and an outgoing data stream comprising the synchronization pattern. The synchronization system (100) comprising: a) a storage element (110) adapted for clocking the synchronization pattern of the incoming data stream at a first clock rate, b) a correlator (120) adapted for correlating the clocked-in data with the internal synchronization pattern, at a second clock rate which is a clocked down synchronous version of the first clock rate. The correlator (120) is adapted to determine a timing offset between the clocked-in data and the internal synchronization pattern within a fixed processing time. The timing offset can be used for aligning the outgoing data stream with the incoming data stream.

## Description

### Field of the invention

The invention relates to the field of synchronization systems. More specifically it relates to a synchronization system adapted for synchronizing an incoming data stream based on a synchronization pattern.

### Background of the invention

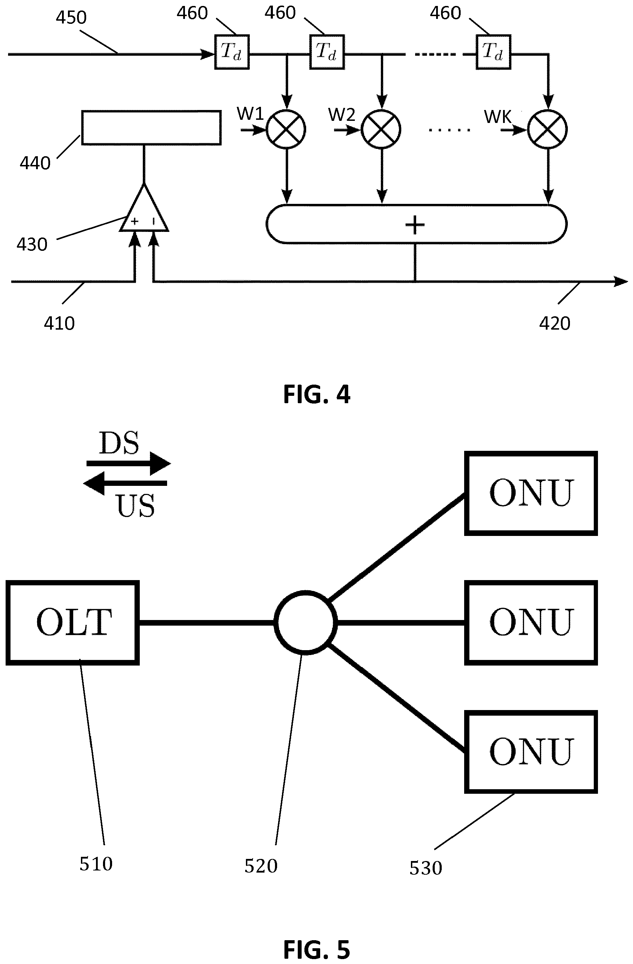

Passive optical networks, such as illustrated in FIG. 5, are being used more and more to keep up with the ever increasing demand of high-speed data. The passive optical network illustrated in FIG. 5 comprises an optical line terminal 510 (OLT), connected with a passive optical splitter 520, connected with a plurality of optical network terminals 530 (ONT).New standards are continuously being developed, such as the XG-PON, the NGPON2, and the 10G-EPON standards. These standards clearly show higher increasing upstream bitrates, which become exceedingly difficult to realize without dramatically increasing the costs.

Increasing the data rate of a communication link can be achieved in several ways. Components can be used which are rated for higher speeds, or equalization can be used. Whereas the former is more expensive, equalization enables the use of low-cost components.

In the upstream direction different transmitters are sending upstream data over different channels wherein the channel characteristics of the different channels are deferring : e.g. one user may be further away than the other user, one channel may have a fiber which causes dispersion. Hence equalization must be done on a burst by burst basis. Thereby for every burst a training sequence (also referred to as synchronization pattern) in a preamble is needed.

Equalization is already present in continuous-time data transmission systems. In passive optical networks however, the upstream transmission from multiple optical network units results in bursty traffic at the receivers in central offices. In order to support longer network span or utilize low-bandwidth low-cost components in optical network units (ONUs), an adaptive equalizer is needed which is able to adapt on a burst-by-burst basis. Another application for such burst-mode equalizers can be found in optical packet switched networks.

To adapt the parameters of the equalizer for each burst, a training preamble is included in each burst. The exact beginning of this training sequence however, is unknown to the receiver. For this purpose, an alignment system is required.

Alignment systems are already present in bit-error rate testers (BERT), and make use of a match loop, a timing offset, or a sequencer offset. Such systems cannot be used in receivers for which the input signal is heavily degraded and the bit error rate is high. Moreover, as the overhead of each burst must be minimized, only a limited time is available for alignment.

There is therefore room for improvement in synchronization systems, especially when they need to be applied for error prone data bursts in which there is only a limited time available for alignment.

### Summary of the invention

It is an object of embodiments of the present invention to provide a synchronization system for synchronizing an incoming data stream at a high data rate. For example a data rate higher than 1 Gbps may be handled, in some embodiments e.g. even higher than 5 Gbps or in other embodiments even 10 Gbps or even higher than 10 Gbps.

The above objective is accomplished by a method and device according to the present invention.

In a first aspect embodiments of the present invention relate to a synchronization system for synchronizing an incoming data stream with a synchronization pattern, the incoming data stream comprising the synchronization pattern. The synchronization system being adapted for generating an internal synchronization pattern which is the same as the synchronization pattern of the incoming data stream and an outgoing data stream comprising the same synchronization pattern. The synchronization system comprising: a storage element adapted for clocking in a part of the incoming data stream at a first clock rate, wherein the clocked-in data comprises the synchronization pattern, a correlator adapted for correlating the clocked-in data with the internal synchronization pattern, at a second clock rate which is a clocked down version of the first clock rate and synchronous with the first clock rate, wherein the correlator is adapted to determine a timing offset between the clocked-in data and the internal synchronization pattern, wherein the processing time required to determine the timing offset is a fixed number of cycles at the first clock rate and wherein the timing offset can be used for aligning the outgoing data stream with the incoming data stream.

It is an advantage of embodiments of the present invention that the correlation is done at a clocked down version of the first clock rate. As the correlator runs at a lower rate than the first clock rate, it is an advantage of embodiments of the present invention that the correlator can be implemented using a combination of synthesized logic. This also means that synchronization systems according to the present invention can handle higher first clock rates than prior art synchronization systems wherein the correlation is done at the first clock rate. It is an advantage of embodiments of the present invention that counters and adders required for the implementation of the correlation can be implemented at a decreased second clock rate. In embodiments of the present invention only the circuitry for the parts working at the first clock rate are implemented in current-mode-logic (CML). Compared to a system where the entire design is implemented using CML this will result in a reduced power consumption. It is an advantage that notwithstanding the fact that the correlation is done at a clocked down version of the data clock, it is still possible to do the data alignment using the obtained offset. This is possible because of the fixed processing time required to determine the timing offset which can be expressed as a fixed number of cycles at the first clock rate. Even though the correlation is done at the second clock rate, the time it takes to do the correlation is the same for each correlation and can be expressed in a number of clock cycles at the first clock rate. Hence it is possible to align the outgoing data stream with the incoming data stream based on the obtained timing offset and on the processing time. In embodiments according to the present invention the synchronization system can be designed such that the alignment time is smaller than the alignment time imposed by the standard of the communication system for which the synchronization system is implemented. The alignment time thereby corresponds with the processing time. It is an advantage of embodiments of the present invention that alignment with a distorted input signal is possible because of the correlation with the internal synchronization pattern. Prior art synchronization systems where the incoming bits are compared with a synchronization pattern (training sequence) and where it is checked if all the incoming bits are equal to the bits of the synchronization pattern (training sequence) are failing or tend to have a longer alignment time when the incoming bits are distorted.

In embodiments according to the present invention the correlator is configured for comparing the clocked-in data with the internal synchronization pattern by ring-shifting one data sequence relative to the other data sequence at the second clock rate thus obtaining a timing offset corresponding with a maximum correlation signal.

It is an advantage of embodiments of the present invention that by ring-shifting the internal synchronization pattern relative to the clocked-in data it is possible to correlate both data sequences with each other. It is an advantage of embodiments of the present invention that this correlation always results in the same processing time. The reason therefore being that the ring-shifting always takes the same amount of clock cycles.

In embodiments according to the present invention comparing comprises a bit by bit comparison, between the clocked-in data and the internal synchronization pattern, thereby counting the number of bit errors wherein the lowest number of bit errors corresponds with the maximum correlation signal.

It is an advantage of embodiments of the present invention that the number of shifts for which the comparison results in the lowest number of errors occurs can be used to determine the timing-offset.

In embodiments according to the present invention the storage element is a shift register.

It is an advantage of embodiments of the present invention that high speed implementations of the storage element are possible. The maximum first clock rate is thereby limited by the maximum allowable clock rate of the storage element. By increasing this clock rate the first clock rate can also be increased.

In embodiments according to the present invention the correlator comprises a ring-shift register adapted for ring-shifting the internal synchronization pattern.

In embodiments according to the present invention the correlator comprises a comparator block configured for comparing the ring-shifted internal synchronization pattern with the clocked-in data to obtain a correlation signal.

In embodiments according to the present invention the correlator comprises a storage block adapted for storing the maximum correlation signal and an index number corresponding with the number of shifts of the ring shift register corresponding with this maximum correlation signal.

In embodiments according to the present invention the synchronization system comprises an alignment block configured for aligning the outgoing data stream with the incoming data stream based on the obtained timing offset.

In embodiments according to the present invention the synchronization pattern is a pseudo random binary sequence.

In a second aspect embodiments of the present invention relate to a method for synchronizing an incoming data stream which comprises a synchronization pattern, the method comprising:
- clocking in part of the incoming data stream at a first clock rate such that the clocked-in data comprises the synchronization pattern,
- correlating the clocked-in data with an internal synchronization pattern at a second clock rate which is a clocked down version of the first clock rate and which is synchronous with the first clock rate, thus obtaining a timing offset corresponding with a maximum correlation signal, wherein the internal synchronization pattern is the same as the synchronization pattern of the clocked-in data,
- aligning an outgoing data stream, comprising the synchronization pattern, with the incoming data stream based on the obtained timing offset.

In embodiments according to the present invention the correlating step comprises ring-shifting the internal synchronization pattern at the second clock rate and comparing the ring-shifted internal synchronization pattern with the clocked-in data to obtain a maximum correlation signal.

It is an advantage of embodiments of the present invention that by simple comparison (e.g. by counting the error rate) a maximum correlation signal can be obtained. When counting the error rate the maximum correlation signal corresponds with the smallest error rate.

In a third aspect embodiments of the present invention relate to a burst-mode receiver, the bust mode receiver comprising a burst-mode equalizer which comprises a synchronization system in accordance with embodiments of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic drawing of a synchronization system in accordance with embodiments of the present invention.
FIG. 2 shows a schematic drawing of a synchronization system comprising a ring shift register in accordance with embodiments of the present invention.
FIG. 3 shows a schematic drawing of synchronization system comprising an analog switch array to select the correct offset in accordance with embodiments of the present invention.
FIG. 4 shows a schematic drawing of an equalizer in accordance with embodiments of the present invention.
FIG. 5 shows a schematic drawing of a passive optical network.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "a second clock which is a clocked down version of a first clock", reference is made to synchronous clocks of which the clock rate of the first clock (the first clock rate) is an integer multiple of the clock rate of the second clock (the second clock rate).

In embodiments according to the present invention the first clock rate is at least 10 Gbps.

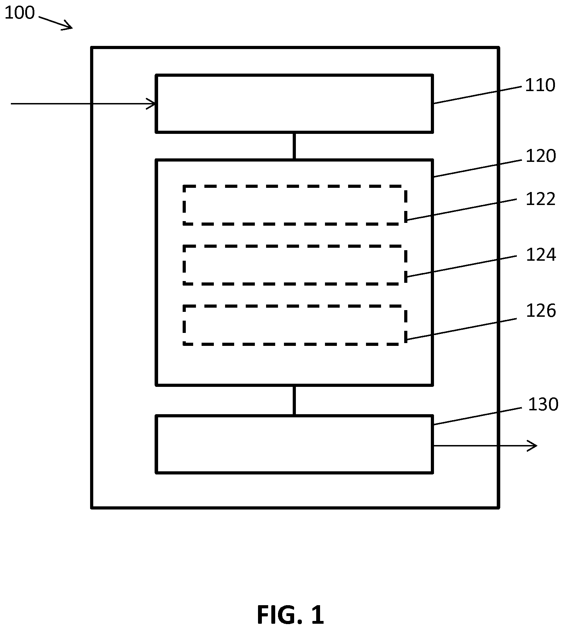

In a first aspect, embodiments of the present invention relate to a synchronization system for synchronizing an incoming data stream with a synchronization pattern. A schematic overview of such a system is shown in FIG. 1. The synchronization system 100 is adapted for clocking-in the incoming data stream at a first clock rate corresponding with the incoming data rate. The incoming data stream may be bursts of data whereby in the header of each burst a synchronization pattern is present. The synchronization system 100 is adapted for generating an internal synchronization pattern which is the same as the synchronization pattern of the incoming data stream 140 and for generating an outgoing data stream comprising the same synchronization pattern.

The synchronization system 100 comprises a storage element 110 adapted for clocking in a part of the incoming data stream. This is done at the first clock rate which corresponds with the incoming data rate. The part of the incoming data which is clocked-in thereby comprises the synchronization pattern. The clocked-in data may, however, comprise errors because of the transmission medium.

The synchronization system 100 also comprises a correlator 120 adapted for correlating the clocked-in data with the internal synchronization pattern. Thereby bit errors may be present in the clocked-in data. The correlator 120 is adapted to determine a timing offset between the clocked-in data and the internal synchronization pattern. The correlator does this at a second clock rate which is a clocked down version of the first clock rate. The processing time required to determine the timing offset is a fixed number of cycles at the first clock rate.

In embodiments according to the present invention the obtained timing offset can be used for aligning the outgoing data stream with the incoming data stream. This is done at the first clock rate. This may be done by an output synchronization pattern generator.

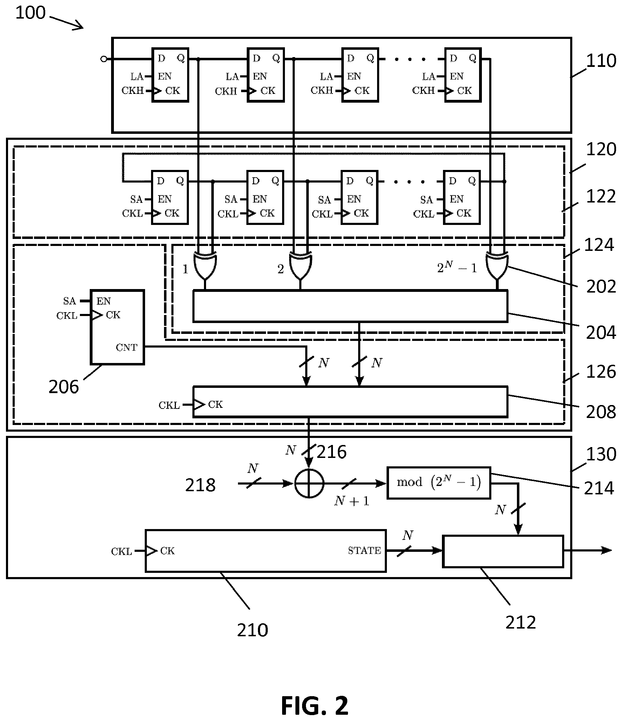

In embodiments according to the present invention the synchronization system comprises a storage element adapted for clocking in a part of the incoming data stream at a first clock rate. The input data stream may be heavily degraded. The synchronization system may comprise a digital circuit that takes the heavily degraded input data and performs a decision on it. The resulting digital signal is then passed at the full data speed clock rate (i.e. at the first clock rate) into the storage element. Such a storage element 110 may for example be a shift register. In the exemplary embodiment of FIG. 2 the shift register 110 is a 15-bit shift register (2⁴-1). In this exemplary embodiment of the present invention the last 15 bits, that have been clocked in the input shift register, of the degraded synchronization pattern (e.g. a pseudorandom binary sequence (PRBS)) are captured.

The storage element 110 may comprise a series of cascaded high-speed sample-and-hold amplifiers, wherein each tap is connected to a slow input register to store the data. The sample-and-hold amplifiers serve as delay elements. Additional delay elements may be added to relax the load requirements on the sample-and-hold amplifiers.

In embodiments according to the present invention the correlator 120 comprises a ring-shift register 122 adapted for ring-shifting the internal synchronization pattern. In the exemplary embodiment of the present invention, illustrated in FIG. 2, the ring-shift register 122 is a 15-bit (2^{N}-1, wherein N is 4) ring shift register. The internal synchronization pattern is the same as the synchronization pattern of the incoming data stream. However, the clocked-in data may be degraded and therefore errors may be present in the data which is clocked-in in the storage element 110. The internal synchronization pattern in the ring-shift register 122 is shifted around at a clocked down version of the data clock (i.e. at the second clock rate).

After the incoming data stream has been clocked in, the local ring shift register 122 will shift around a complete synchronization pattern (e.g. a complete PRBS sequence) inside the ring-shift register. At the same time, a counter keeps track of the number of shifts within this ring.

In embodiments according to the present invention the correlator 120 comprises a comparator block 124 adapted for comparing the ring-shifted internal synchronization pattern with the clocked-in data to obtain a correlation signal. In the exemplary embodiment of FIG. 2 the comparator block 124 comprises 15 XOR-gates 202 and a bit adder 204. The register values of the storage element 110 (the shift register) and the register values of the ring-shift register 122 are the inputs of the 15 XOR-gates. The outputs of these XOR-gates 202 are then added together using a bit-adder 204. In this step the internal synchronization pattern (e.g. the correct PRBS sequence) is shifted around the ring, and the number of errors is calculated for each shift. This is done at the second clock rate. This is an example of a digital implementation of the comparator block 124 in the correlator 120.

In embodiments according to the present invention the correlator 120 comprises a storage block 126 adapted for storing the maximum correlation signal and an index number corresponding with the number of shifts of the ring shift register corresponding with this maximum correlation signal. In the exemplary embodiment of FIG. 2 the maximum correlation signal corresponds with the minimum value of the error count. This error count is obtained using the XOR-gates 202 and the bit-adder 204. In the exemplary embodiment illustrated in FIG. 2 the storage block 126 is adapted for finding the minimum value of the error count. An N-bit counter 206 is used to keep track of the current index, and the memory block 208 retains the index of the lowest error count. This way, the storage block 126 outputs the index number of the shifted internal synchronization pattern (e.g. PRBS) for which the number of errors is minimal. This is the ring index with the lowest error count.

The memory block 208 may comprise 2 registers, a first one for storing the minimum number of errors and a second one for storing the corresponding index. Whenever the number of errors from the correlator (in the example of FIG. 2 from the bit adder 204) is lower than the currently stored value in the register, the new number of errors is stored in the first register, and the index from the before mentioned counter is stored in the second register.

After the internal synchronization pattern has completed one full cycle in the ring-shift register 122, the first register will contain the minimum number of errors that was found, and the second register will contain the corresponding index. In the case of error-free transmission, the first register is 0. Register 2 will contain any value from 0 to 2^N - 1, wherein N is 4 in the exemplary embodiment of FIG. 2. In general N may for example be an integer number between 3 and 10, for example between 3 and 7. The lower the number of bits, the more difficult it is to estimate the channel. N could be as high as desired, however, the number of flipflops and delay elements will raise exponentially (e.g. 3*(2^{N}-1)) with N.

For very poor signals, longer PRBS sequences can be used, such as PRBS 2⁵-1 or PRBS 2⁶-1. In this case, a tradeoff can be made between equalization performance and duration of the synchronization pattern (training duration). The longer the PRBS sequence the better the frequency spread, the better the synchronization.

It is an advantage of embodiments of the present invention that the number of clock cycles that occurs between clocking in the very first data bit in the storage element 110, and the last step of shifting around the ring, is fixed. Hence a fixed offset can be used to compensate for this processing time. In embodiments according to the present invention this fixed offset is programmable. It is an advantage of these embodiments that it should be programmed only once, the reason therefore being the fixed processing time. As the processing time is fixed, the fixed offset may be hard programmed in the firmware of the synchronization system.

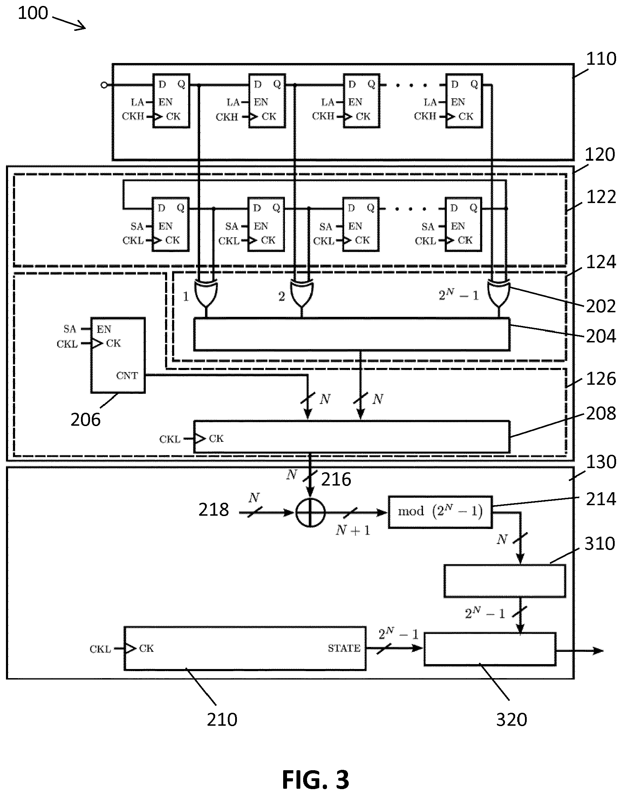

In embodiments according to the present invention, the synchronization system 100 comprises an alignment block 130 adapted for aligning the outgoing data stream with the incoming data stream based on the obtained timing offset. In embodiments according to the present invention the outgoing data stream is generated using the obtained timing offset. In embodiments according to the present invention this outgoing data stream is the training signal for an equalizer. Thereby the clocked-in data comprising the (distorted) synchronization pattern is aligned with the internal synchronization pattern. This alignment block may comprise a synchronization pattern generator. The synchronization pattern generator will shift its synchronization pattern based on the obtained timing offset. In embodiments of the present invention initially, during the preamble, the incoming data stream and the outgoing data stream are being aligned. After the timing offset is found and the outgoing data stream is running, the storage element and the correlator may be switched off. Embodiments of the present invention may comprise an equalizer adapted for comparing the training signal to the synchronization pattern of the degraded incoming data stream. Based on this comparison the adaptive equalizer may control its weights. After the weights are converged they are held at their final value and the alignment block is turned off. In embodiments of the present invention the data coming after the preamble is not read by the aligner but goes directly to the equalizer for channel equalization. In the exemplary embodiment of FIG. 2 the alignment block comprises a PRBS (2^{N}-1) generator for generating the training signal. This may for example be a ring shift register 210, containing the same synchronization pattern (PRBS sequence), which is running at the first clock rate. Using a multiplexer, the timing offset (e.g. the index at the minimum amount of errors) may be used to select one of the outputs of this ring shift register. In the implementation illustrated in FIG. 2, the PRBS generator outputs all of its register outputs. In the exemplary embodiment of FIG. 2 these outputs are connected to a look-up table 212. The index number 216 where the number of errors is minimal, generated by the correlator 120, is augmented with a fixed offset 218 and then used to shift the state of the PRBS shift register using the look-up table 212 and the mod(2^{N}-1) block 214. Alternatively to increase speed, the PRBS generator can be expanded into a high-speed ring shift register and a multiplexer to select the correct offset. Advantageously, the multiplexer may be made out of high-speed analog switches. An example thereof is illustrated in FIG. 3. FIG. 3 is the same as FIG. 2 except for the alignment block 130. In FIG. 3 a demultiplexer (e.g. a one hot decoder) 310 is present between the mod(2^{N}-1) block 214 and an analog switch array 320 to select the correct offset, such that the input of the analog switch array 320 is 2^{N}-1 bits wide. In FIG. 3 the interconnection between the PRBS generator 210 and the analog switch array 320 is 2^{N}-1 bits wide. In FIG2, the result of the modulo operation is used in the look up table to determine the correct offset. This block, however, operates at the full datarate. Because such a lookup table contains a lot of combinatorial logic, an alternative is proposed in FIG3. Here, the N-bit result vector is decoded into a 2^N - 1 bit vector (e.g. like 000 becomes 0000000, 001 becomes 0000001, 010 becomes 0000010, 011 becomes 0000100, 100 becomes 0001000, ...). Then, each of these bits drives an analog switch that connects one of the PRBS taps to the final output.

In embodiments of the present invention the internal synchronization pattern is shifted through the ring-shift register until each possible position of the internal synchronization pattern in the ring-shift register is obtained. Thus the processing time is always the same for each incoming data stream. This would not be the case if the correlation would be done until the correlation signal is above a certain threshold. It is advantageous that the processing time is fixed because it allows to align the outgoing data stream with the incoming data stream based on the obtained timing offset. In embodiments of the present invention the delay between clocking-in the input and generating the synchronization signal (training signal) is deterministic and only dependent on the number of registers in between. Hence only a fixed offset is needed to compensate for the fixed processing time. Therefore the correlation can be done at a clocked down version of the first clock rate (the incoming data rate). Thereby it does not matter how much the first data clock is scaled to obtain the second data clock as long as the second data clock is relative to the first data clock. This implies that the data rate of an incoming data stream can be higher for synchronization systems according to the present invention than for prior art synchronization systems which are not operating using a clocked down version of the incoming data clock. In embodiments according to the present invention downscaling of the second clock may be done up to the point that the synchronization system can be synthesized.

By using a shorter synchronization pattern (e.g. a shorter PRBS sequence) the second clock rate can be decreased even more. When a shorter PRBS sequence is used, however, the probability that the resulting offset is wrong will go up. However, when starting from a long PRBS sequence and gradually reducing the length, the equalizer may run into problems before the aligner does.

In embodiments of the present invention the first clock speed may for example be between 10 Gbps and 28 Gbps the second clock speed may for example be between 0.625 Gbps (10/16) and 28 Gbps (28/32), and the processing time may, in the case of a PRBS sequence with length 2⁴-1, for example vary between 15 x (16 + 1) x (1/10Gbps) = 25.5ns and 15 x (32 + 1) x (1/28Gbps) = 17.7ns.

In embodiments according to the present invention the only blocks that work at the first clock rate are the storage element (e.g. input shift register) and the alignment block which may for example comprise a synchronization pattern generator and a multiplexer. These can - if needed- both be implemented in current mode logic CML (e.g. high speed flip-flops implemented in CML). In contrast to implementing the complete synchronization system in CML, the power is greatly reduced. It is moreover advantageous that these elements are much simpler to implement than the correlator 120 which is clocked at a lower second clock rate. These may be implemented using a combination of synthesized logic for the low speed parts, and analog design for the high speed parts (CML logic).

Implementation of the storage element 110 and the alignment block 130 in CML results in a higher power consumption. It is an advantage of embodiments of the present invention that the alignment block is only active during the preamble of an incoming data burst, where the channel is estimated. It is therefore an advantage of embodiments of the present invention that by reducing the overhead also the average power dissipation drops.

For high speed implementation, the digital shift register 210 can be changed into a high-speed, current-mode latch. This is a unit cell, and as such can be designed using an analog design flow.

Secondly, the multiplexer 212 can be implemented using analog switches. To do this, the output index may first be expanded with a one-hot decoder (which can also be done at the slow clock speed).

In embodiments according to the present invention the alignment block 130 comprises an aligner with an adaptive equalizer. For a distorted incoming data stream, the obtained timing offset might be off by one or two bits at most. When using the aligner with an adaptive equalizer, such offset can be easily captured in the equalizer by shifting the center tap of the FIR-filter. The reason therefore being that, in embodiments according to the present invention, the sampling is fixed to 1 sample per bit period. In these embodiments only the pure bit stream is used and not its analog waveform. Synchronization systems according to the present invention can be designed beyond the Nyquist rate, because details of the analog waveform are not needed.

In embodiments according to the present invention the incoming data stream may be sampled more than once, for example twice, per bit period. The correlator 120 may take into account the plurality of samples per bit when correlating the clocked-in data with the synchronization pattern.

A possible implementation may be as follows: a) when sampling twice per bit period a third state (X) may be used to indicate changing bits; b) when the errors are counted together, X-states are not counted by the correlator 120. Similar to 'soft decoding', this improves the alignment for very poor signals.

In embodiments of the present invention the correlator 120 may for example be implemented in a semiconductor process technology such as the TSMC-40nm technology.

In the exemplary embodiment illustrated in FIG. 2 the following steps may be applied for initializing the synchronization system:
- the synchronization system may be initialized by setting the fixed offset to zero,
- upon reception of an incoming data stream a synchronization pattern is clocked-in in the storage element 110,
- next the clocked-in data is compared with the internal synchronization pattern to obtain a timing offset,
- next the timing offset is used for aligning an outgoing data stream, comprising the synchronization pattern, with the incoming data stream. This may for example be done by changing the output tap of a ring-shift register in which the synchronization pattern (e.g. PRBS sequence) is shifted,
- thereby compensating for the processing time of the synchronization system can be done by adapting the fixed offset when the sequence is not aligned properly.

This may be done as illustrated in FIG. 4. In a first step during the alignment, the equalizer has one tap 460 set fixed to 1.0, and the others fixed to 0. In that case, the output 420 of the equalizer is just a delayed version of the input signal 450. The error signal that steers the adaptive algorithm may be calculated as the training signal 410 (which is the outgoing data stream of the synchronization system, this is the desired signal) minus the actual equalizer output signal 420 (actual signal). In FIG. 4 this is done by the difference amplifier 430 of which the output is connected to the weight control block 440. So, in order to correctly steer the weights, the equalizer output 420 should be correctly aligned with the locally generated training signal 410. The equalizer output is already visible as an output signal of the receiver, and the training signal (the outgoing data stream of the synchronization system) can either be branched off to the output of the synchronization system, or the alignment block 130 can be replicated in order not to load the output PRBS generator of the aligner too much. The first way to notice the misalignment is then by comparing the output signal of the receiver and the training signal. In embodiments of the present invention this is done for debugging the system. In a real world application, however, misalignment will lead to an incorrect solution of the weights distribution. This will cause the equalizer output signal to become completely corrupted, causing a lot of bit errors. Then, at a higher level, retransmission can be requested. Then a new attempt can be made to align and equalize the burst. This process can be repeated until convergence is achieved.

In embodiments of the present invention the goal is to make sure that the equalizer can equalize the signal. In order to do that, one of the middle taps 460 is set to 1, and the others to 0. In that case the output 420 will be a delayed version of the input signal 450. The training signal 410 needs to be a training signal which has not been degraded but has been aligned to the output 420. These conditions are the initial starting conditions for the LMS-algorithm that will gradually change the weights to a correct setting that equalizes the signal properly. So, before letting the equalizer run its course with these weights, the output 420 is shifted using the aligner.

To do this, the input signal 450 is connected to the input in the input data shift register in the aligner. The output of the aligner (output of the look-up table 212 in FIG. 2, or of the analog switch array 320 in FIG. 3) is used as the training signal 410. Initially, the offsetted index is set to 0. Next, the aligner clock is turned on and the described procedure is followed (e.g. sampling the incoming data stream more than once per bit period as described above), resulting in an offsetted index. With this index, the correct output PRBS generator tap is connected to the output of the analog switch array 320.

At this point, the offset between the training signal 410 and the output signal 420 will probably not be 0, but the offset between the training signal 410 and the output signal 420 is deterministic and only system-dependent. To get rid of the remaining offset, the output signal 420 and the training signal 410 are monitored, and the fixed offset is set accordingly.

In embodiments of the present invention where the system is integrated on-chip, it is not possible to monitor every signal. In embodiments of the present invention, to monitor a signal, it is required to bring it outside, it needs to be buffered, causing extra loading of this signal. The output signal 420 can be monitored as it is an output signal. In embodiments of the present invention the training signal 410 is not brought outside. In that case it could be buffered to bring it outside. However, this could degrade the signal. In that case the equalizer will try to shape the incoming data signal to a degraded training signal. Therefore, in embodiments of the present invention, a replica is made of the alignment block 130 that instead sends its output outside.

In memory block 208, the minimum error count and index are stored. When very degraded signals are applied, there may be several minima. In embodiments of the present invention, instead of only storing the last minimum, the memory block is adapted for storing all of them. In embodiments of the present invention, during the equalization, the burst mode receiver may be adapted for iterating through the different minima until convergence is achieved.

It is an advantage of embodiments of the present invention that once the fixed offset is correctly set it does not need to be changed anymore. It is moreover an advantage of embodiments of the present invention that is does not matter at which moment the synchronization system is initialized. The actual offset of the internal synchronization pattern (at the moment the synchronization system is initialized), within the storage element (the input shift register) does not matter. Therefore it does not matter at which moment the synchronization system is initialized.

In a second aspect embodiments of the present invention relate to a method for synchronizing an incoming data stream which comprises a synchronization pattern. The method comprises a first step clocking in part of the incoming data stream at a first clock rate such that the clocked-in data comprises the synchronization pattern.

After clocking in the data the method comprises a step correlating this data with an internal synchronization pattern at a second clock rate which is a clocked down version of the first clock rate and which is synchronous with the first clock rate. The result of this correlation step is a timing offset corresponding with a maximum correlation signal, wherein the internal synchronization pattern is the same as the synchronization pattern of the clocked-in data.

The obtained timing offset is used in the alignment step for aligning an outgoing data stream with the incoming data stream. The outgoing data stream comprises the synchronization pattern.

Synchronization systems according to the present invention may be used in a burst-mode receiver. The upstream data rate of the entire existing network infrastructure can be upgraded by only replacing the optical line terminal receiver chip with one that comprises a burst-mode equalizer, which comprises a synchronization system in accordance with embodiments of the present invention.

In contrast with replacing the entire network structure with high-cost components, this is a very cheap and much more economical solution.

Synchronization systems, according to embodiments of the present invention can also be used in systems where the channel parameters fluctuate over time. For example, light fidelity (Li-Fi) networks are the wireless equivalent of optical fiber networks in which the channel parameters can vary. Also here, equalization can be used to improve the bitrate. This can be done using synchronization systems in accordance with embodiments of the present invention.

In addition, the alignment block of a synchronization system in accordance with embodiments of the present invention can be used in situations where the channel parameters fluctuate over time. In these embodiments a short synchronization pattern (also referred to as a short training sequence) is periodically sent, to which the alignment block will align the locally generated synchronization pattern (training signal).

At this point, the coefficients of the equalizer taps can be estimated. As the method used in this invention is much faster than the typically used conventional software-based equalization method, it can be done more often without increasing the overhead dramatically.

## Claims

1. A synchronization system (100) for synchronizing an incoming data stream (140) with a synchronization pattern, the incoming data stream comprising the synchronization pattern,
the synchronization system (100) being adapted for generating an internal synchronization pattern which is the same as the synchronization pattern of the incoming data stream (140) and an outgoing data stream comprising the same synchronization pattern,
the synchronization system (100) comprising:
- a storage element (110) adapted for clocking in a part of the incoming data stream at a first clock rate, wherein the clocked-in data comprises the synchronization pattern,
- a correlator (120) adapted for correlating the clocked-in data with the internal synchronization pattern, at a second clock rate which is a clocked down version of the first clock rate and synchronous with the first clock rate, wherein the correlator (120) is adapted to determine a timing offset between the clocked-in data and the internal synchronization pattern, wherein the processing time required to determine the timing offset is a fixed number of cycles at the first clock rate and wherein the timing offset can be used for aligning the outgoing data stream with the incoming data stream.

2. A synchronization system (100) according to claim 1 wherein the correlator (120) is configured for comparing the clocked-in data with the internal synchronization pattern by ring-shifting one data sequence relative to the other data sequence at the second clock rate thus obtaining a timing offset corresponding with a maximum correlation signal.

3. A synchronization system (100) according to claim 2 wherein comparing comprises a bit by bit comparison, between the clocked-in data and the internal synchronization pattern, thereby counting the number of bit errors wherein the lowest number of bit errors corresponds with the maximum correlation signal.

4. A synchronization system (100) according to any of the previous claims, wherein the storage element (110) is a shift register.

5. A synchronization system (100) according to any of the previous claims, wherein the correlator (120) comprises a ring-shift register (122) adapted for ring-shifting the internal synchronization pattern.

6. A synchronization system (100) according to claim 5, wherein the correlator (120) comprises a comparator block (124) configured for comparing the ring-shifted internal synchronization pattern with the clocked-in data to obtain a correlation signal.

7. A synchronization system (100) according to claim 6, wherein the correlator (120) comprises a storage block (126) adapted for storing the maximum correlation signal and an index number corresponding with the number of shifts of the ring shift register corresponding with this maximum correlation signal.

8. A synchronization system (100) according to any of the previous claims, the synchronization system (100) comprising an alignment block (130) configured for aligning the outgoing data stream with the incoming data stream based on the obtained timing offset.

9. A synchronization system (100) according to any of the previous claims wherein the synchronization pattern is a pseudo random binary sequence.

10. A method for synchronizing an incoming data stream which comprises a synchronization pattern, the method comprising:
- clocking in part of the incoming data stream at a first clock rate such that the clocked-in data comprises the synchronization pattern,
- correlating the clocked-in data with an internal synchronization pattern at a second clock rate which is a clocked down version of the first clock rate and which is synchronous with the first clock rate, thus obtaining a timing offset corresponding with a maximum correlation signal, wherein the internal synchronization pattern is the same as the synchronization pattern of the clocked-in data,
- aligning the an outgoing data stream, comprising the synchronization pattern, with the incoming data stream based on the obtained timing offset.

11. A method according to claim 10, wherein the correlating step comprises ring-shifting the internal synchronization pattern at the second clock rate and comparing the ring-shifted internal synchronization pattern with the clocked-in data to obtain a maximum correlation signal.

12. A burst-mode receiver, the bust mode receiver comprising a burst-mode equalizer which comprises a synchronization system according to any of the claims 1 to 9 if the present invention.
